# EUROPEAN PATENT APPLICATION

(11) **EP 3 088 704 A1**
(43) Date of publication of application: **02.11.2016**
(21) Application number: 16161983.8
(22) Date of filing: 23.03.2016
(51) Int. Cl.: F02C 7/141, F01D 11/24, F01D 25/14

(54) **HEAT PIPE COOLING SYSTEM FOR A TURBOMACHINE**

(30) Priority: 02.04.2015 US 201514676905
(71) Applicant: General Electric Company, Schenectady, NY 12345 (US)
(72) Inventor: EKANAYAKE, Sanji, Atlanta, GA Georgia 30339 (US); SCIPIO, Alston Ilford, Atlanta, GA Georgia 30339 (US); DAVIS, Dale Joel, Greenville, SC South Carolina 29615 (US); YANG, Timothy Tahteh, Greenville, SC South Carolina 29615 (US)
(74) Representative: Lee, Brenda

(57) **Abstract**

A turbomachine 100 includes a compressor 110 configured to compress air received at an intake portion to form a compressed airflow that exits into an outlet portion. A combustor 120 is operably connected with the compressor, and the combustor receives the compressed airflow. A turbine 130 is operably connected with the combustor. The turbine 130 receives combustion gas flow from the combustor. The compressor 110 has a compressor casing. A cooling system is operatively connected to the compressor casing. The cooling system includes a plurality of heat pipes 252 attached to and in thermal communication with the compressor casing. The plurality of heat pipes 252 are operatively connected to one or more manifolds 254. The plurality of heat pipes 252 and the one or more manifolds 254 are configured to transfer heat from the compressor casing to a plurality of heat exchangers.

## Description

Exemplary embodiments of the present invention relate to the art of turbomachines and, more particularly, to a heat pipe cooler for a turbomachine.

Turbomachines include a compressor operatively connected to a turbine that, in turn, drives another machine such as, a generator. The compressor compresses an incoming airflow that is delivered to a combustor to mix with fuel and be ignited to form high temperature, high pressure combustion products. The high temperature, high pressure combustion products are employed to drive the turbine. In some cases, the compressed airflow leaving the compressor is re-compressed to achieve certain combustion efficiencies. However, recompressing the compressed airflow elevates airflow temperature above desired limits. Accordingly, prior to being recompressed, the airflow is passed through an intercooler. The intercooler, which is between two compressor stages, lowers the temperature of the compressed airflow such that, upon recompressing, the temperature of the recompressed airflow is within desired limits. However, conventional intercoolers are large systems requiring considerable infrastructure and capital costs.

Simple and combined cycle gas turbine systems are designed to use a variety of fuels ranging from gas to liquid, at a wide range of temperatures. In some instances, the fuel might be at a relatively low temperature when compared to the compressor discharge air temperature. Utilizing low temperature fuel impacts emissions, performance, and efficiency of the gas turbine system. To improve these characteristics, it is desirable to increase the fuel temperature before combusting the fuel.

By increasing the temperature of the fuel before it is burned, the overall thermal performance of the gas turbine system may be enhanced. Fuel heating generally improves gas turbine system efficiency by reducing the amount of fuel required to achieve the desired firing temperature. One approach to heating the fuel is to use electric heaters or heat derived from a combined cycle process to increase the fuel temperature. However, existing combined cycle fuel heating systems often use steam flow that could otherwise be directed to a steam turbine to increase combined cycle output.

In an aspect of the present invention, a turbomachine includes a compressor configured to compress air received at an intake portion to form a compressed airflow that exits into an outlet portion. A combustor is operably connected with the compressor, and the combustor receives the compressed airflow. A turbine is operably connected with the combustor. The turbine receives combustion gas flow from the combustor. The compressor has a compressor casing. A cooling system is operatively connected to the compressor casing. The cooling system includes a plurality of heat pipes attached to and in thermal communication with the compressor casing. The plurality of heat pipes are operatively connected to one or more manifolds. The plurality of heat pipes and the one or more manifolds are configured to transfer heat from the compressor casing to a plurality of heat exchangers.

In another aspect of the present invention, a cooling system for a turbomachine is provided. The turbomachine includes a compressor, and a combustor operably connected with the compressor. The compressor has a compressor casing. A turbine is operably connected with the combustor. The cooling system is operatively connected to the compressor casing. The cooling system includes a plurality of heat pipes attached to and in thermal communication with the compressor casing. The plurality of heat pipes are operatively connected to one or more manifolds. The plurality of heat pipes and the one or more manifolds are configured to transfer heat from the compressor casing to a plurality of heat exchangers.

In yet another aspect of the present invention, a method of extracting heat from a compressor casing of a turbomachine is provided. The method includes a passing step that passes an airflow through a compressor. The compressor casing forms an outer shell of the compressor. The compressor acts on the airflow to create a compressed airflow. An extracting step extracts heat from the compressor casing by thermally conducting the heat to a plurality of heat pipes. The plurality of heat pipes include a molten salt heat transfer medium including one or combinations of, potassium, sodium or cesium. A conducting step conducts heat from the plurality of heat pipes to a heat pipe heat exchanger. The heat pipe heat exchanger is configured to transfer heat to a fuel heating heat exchanger. The heat pipe heat exchanger may be operably connected to a circuit including a heat recovery steam generator heat exchanger.

In the drawings:
FIG. 1 is a simplified schematic diagram of a turbomachine.
FIG. 2 is a partially schematic, axial sectional view through a portion of the turbomachine, according to an aspect of the present invention.
FIG. 3 illustrates a cross-sectional and schematic view of the cooling system, according to an aspect of the present invention.
FIG. 4 illustrates a partially schematic and radial cross-sectional view of the cooling system, according to an aspect of the present invention.
FIG. 5 illustrates a schematic view of a turbomachine incorporating the cooling system, according to an aspect of the present invention.
FIG. 6 illustrates a cross-sectional and schematic view of the cooling system, according to an aspect of the present invention.
FIG. 7 illustrates a method for extracting heat from a compressed airflow generated by a turbomachine, according to an aspect of the present invention.

One or more specific aspects/embodiments of the present invention will be described below. In an effort to provide a concise description of these aspects/embodiments, all features of an actual implementation may not be described in the specification. It should be appreciated that in the development of any such actual implementation, as in any engineering or design project, numerous implementation-specific decisions must be made to achieve the developers' specific goals, such as compliance with machine-related, system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," and "the" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments. Additionally, it should be understood that references to "one embodiment", "one aspect" or "an embodiment" or "an aspect" of the present invention are not intended to be interpreted as excluding the existence of additional embodiments or aspects that also incorporate the recited features.

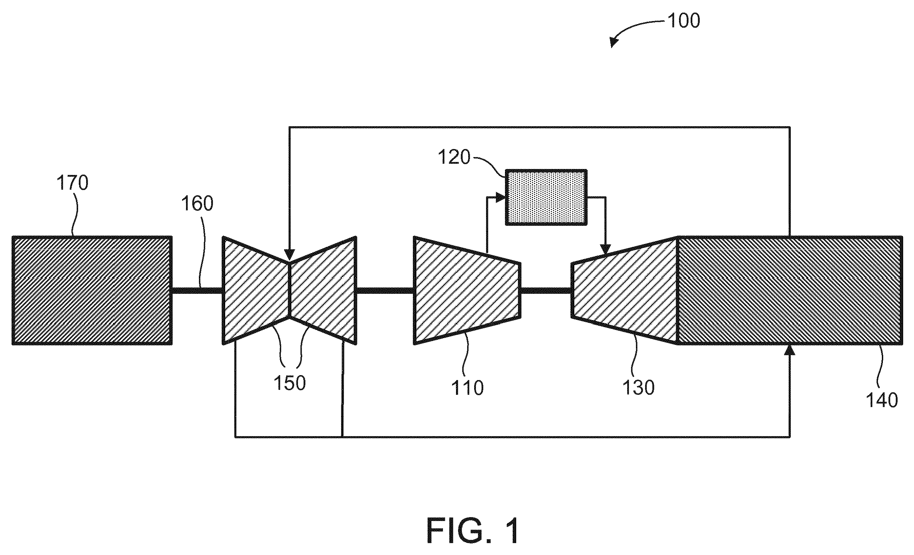

FIG. 1 illustrates a simplified diagram of a turbomachine 100. The turbomachine includes a compressor 110 operably connected to a combustor 120, and the combustor 120 is operably connected to a turbine 130. The turbine's exhaust may be operably connected to a heat recovery steam generator (HRSG) 140. The HRSG 140 generates steam that is directed into a steam turbine 150. In this example, all the turbomachines are arranged in a single shaft configuration, and the shaft 160 drives a generator 170. It is to be understood that the term turbomachine includes compressors, turbines or combinations thereof.

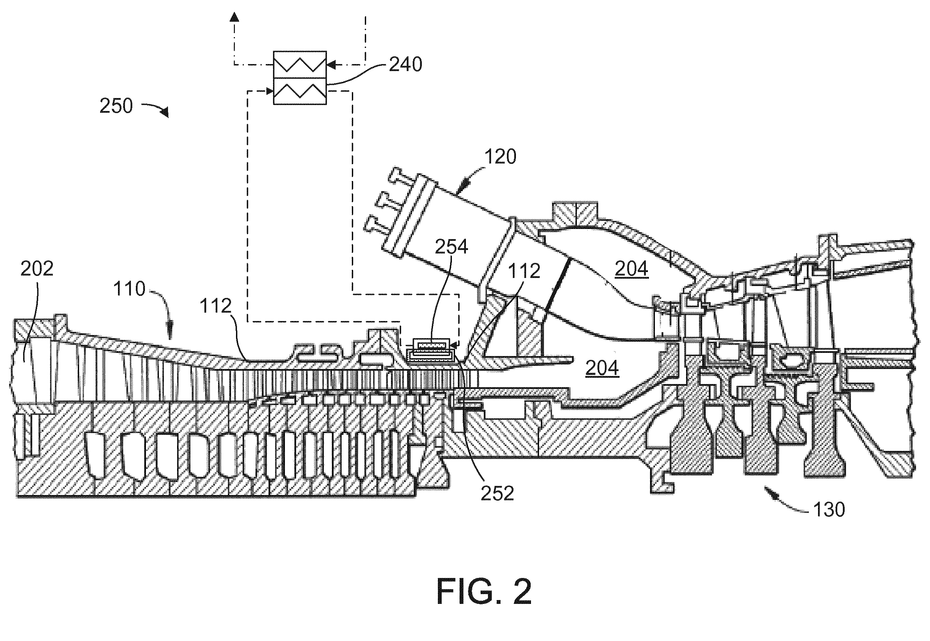

FIG. 2 is a partially schematic, axial sectional view through a portion of the turbomachine, according to an aspect of the present invention. The turbomachine 100 includes a compressor 110 having an intake portion 202 and an outlet portion 204. The compressor compresses air received at the intake portion 202 and forms a compressed airflow that exits from/into the outlet portion 204. The compressor 110 includes a compressor casing 112. The compressor casing 112 forms an outer shell of the compressor 110. The combustor 120 is operably connected with the compressor 110, and the combustor 120 receives the compressed airflow. The turbine 130 is operably connected with the combustor 120, and the turbine 130 receives combustion gas flow from the combustor 120.

A cooling system 250 is operatively connected to the compressor casing 112. For example, a plurality of heat pipes 252 are attached to the compressor casing and the heat pipes are also in thermal communication with the compressor casing. The heat pipes 252 may be circumferentially located around the compressor casing and attached thereto by welds, fasteners, bolts, welded brackets, clamps or any other suitable attachment mechanism. The heat pipes 252 are operatively connected to one or more manifolds 254, and the heat pipes 252 and manifolds 254 are configured to transfer heat from the compressor casing 112 to a plurality of heat exchangers 240.

The heat pipes 252 absorb heat from the compressor casing 112. As the turbomachine 100 operates, air is compressed into a compressed airflow. This compression generates heat. Some of the heat is transferred to the compressor casing, and this heat may be harvested by the heat pipes 252. In one example, the heat pipes are welded to the compressor casing, and the heat pipes are configured to maintain close contact with the exterior surface of the compressor casing (to improve heat transfer). In other embodiments, the heat pipes 252 may be contoured to follow the shape of the compressor casing, or the heat pipes may be embedded into the compressor casing.

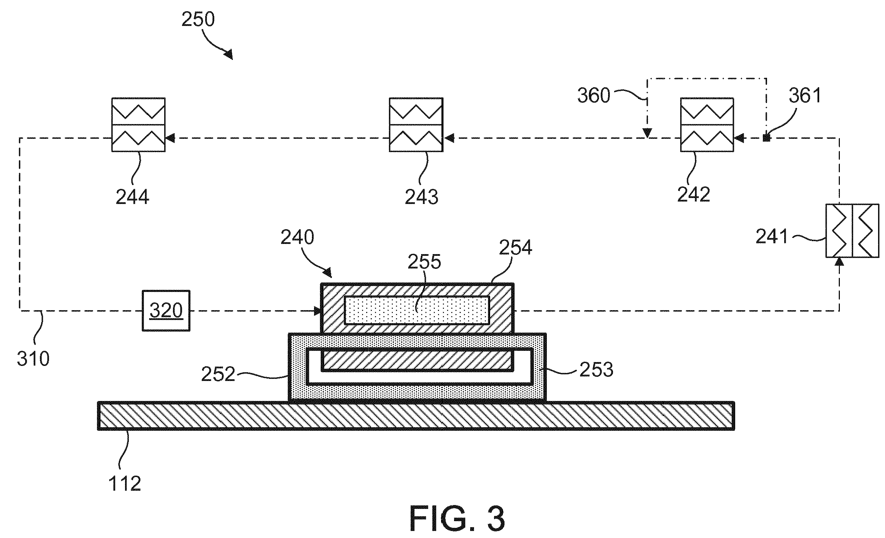

FIG. 3 illustrates a cross-sectional and schematic view of the cooling system 250, according to an aspect of the present invention. The heat pipe 252 is attached to the compressor casing 112. The heat pipe 252 includes a heat transfer medium 253, such as a liquid metal or molten salt. The manifold 254 includes a coolant/heat transfer medium 255, such as water, steam, glycol or oil. The manifold 254 is thermally connected to a heat pipe heat exchanger 240. A conduit 310 connects the heat pipe heat exchanger 240 to a plurality of other heat exchangers. For example, the other heat exchangers may be a fuel heating heat exchanger 241, a fuel pre-heating heat exchanger 242, a HRSG heat exchanger 243 and any other desired heat exchanger 244. The heat pipe heat exchanger 240 transfers the heat from the manifolds 254 to the heat transfer medium in conduit 310. As examples only, the conduit's heat transfer medium may be water, glycol, oil or any other suitable fluid. A pump 320 may be used to force the fluid through the conduit 310 and the heat exchangers. The heat exchangers may also include valve controlled bypass lines 360 (only one is shown for clarity). A valve 361 can be operated so that it directs flow around the heat exchanger (e.g., 242) via bypass line/conduit 360. This feature may be desirable if specific heat exchangers are to be "removed" (possibly temporarily) from the flow along conduit 310. The valves 361 can be manually controlled or remotely controlled.

The manifold 254 is connected to multiple heat pipes 252, and the heat pipes 252 may be arranged circumferentially about the compressor casing/shell 112. The heat pipes 252 include a heat transfer medium 253 which may be a liquid metal, molten salt or Qu material. As examples only, the heat transfer medium may be one or combinations of, aluminum, beryllium, beryllium-fluorine alloy, boron, calcium, cesium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy. As one specific example, the heat transfer medium 253 may be a molten salt comprising potassium, sodium or cesium. The outer portion of the heat pipes may be made of any suitable material capable of serving the multiple purposes of high thermal conductivity, high strength and high resistance to corrosion from the heat transfer medium.

The heat pipes 252 may also be formed of a "Qu-material" having a very high thermal conductivity. The Qu-material may be in the form of a multi-layer coating provided on the interior surfaces of the heat pipes. For example, a solid state heat transfer medium may be applied to the inner walls in three basic layers. The first two layers are prepared from solutions which are exposed to the inner wall of the heat pipe. Initially the first layer which primarily comprises, in ionic form, various combinations of sodium, beryllium, a metal such as manganese or aluminum, calcium, boron, and a dichromate radical, is absorbed into the inner wall to a depth of 0.008 mm to 0.012 mm. Subsequently, the second layer which primarily comprises, in ionic form, various combinations of cobalt, manganese, beryllium, strontium, rhodium, copper, B-titanium, potassium, boron, calcium, a metal such as aluminum and the dichromate radical, builds on top of the first layer and forms a film having a thickness of 0.008 mm to 0.012 mm over the inner wall of the heat pipe. Finally, the third layer is a powder comprising various combinations of rhodium oxide, potassium dichromate, radium oxide, sodium dichromate, silver dichromate, monocrystalline silicon, beryllium oxide, strontium chromate, boron oxide, B-titanium and a metal dichromate, such as manganese dichromate or aluminum dichromate, which evenly distributes itself across the inner wall. The three layers are applied to the heat pipe and are then heat polarized to form a superconducting heat pipe that transfers thermal energy with little or no net heat loss.

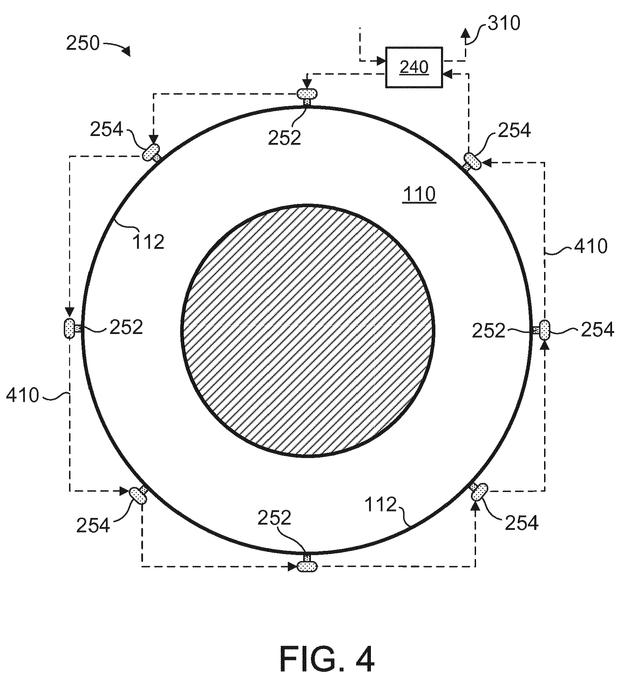

FIG. 4 illustrates a partially schematic and radial cross-sectional view of the cooling system 250, according to an aspect of the present invention. The heat pipes 252 are circumferentially located and distributed around the compressor casing 112. The manifold 254 is connected in a circuit represented by line 410. Line 410 conveys a high temperature coolant fluid. For example, the manifold 254 would form a generally continuous flow loop around the compressor 110. A portion of this flow loop is interrupted and routed to the heat pipe heat exchanger 240, and the outlet therefrom is routed back the manifold 254. In this way, heat generated by the compressor casing 112 (via heat pipes 252) can be transferred to the heat exchanger 240.

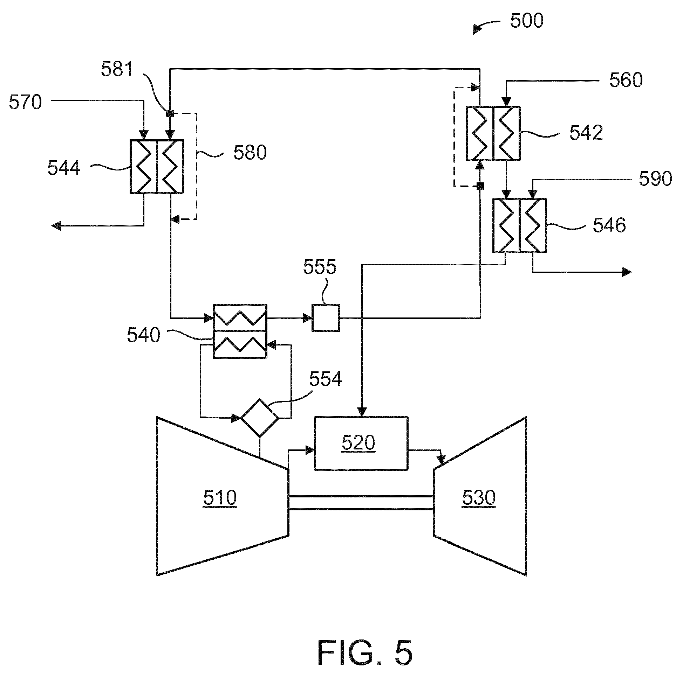

FIG. 5 illustrates a schematic view of a turbomachine 500 incorporating the cooling system, according to an aspect of the present invention. The turbomachine 500 includes a compressor 510, combustor 520 and turbine 530. The cooling system includes a plurality of heat pipes (not shown for clarity) connected to a manifold 554. The manifold 554 is connected to a heat pipe heat exchanger 540. A pump 555 circulates a coolant through a conduit system and a plurality of heat exchangers. The heat pipe heat exchanger 540 is connected to a fuel gas pre-heater heat exchanger 542. Fuel gas 560 is input and travels to the combustor 520. The fuel gas pre-heater heat exchanger is connected to a heat recovery steam generator (HSRG) heat exchanger 544. Water 570 is input to the heat exchanger 544 and heated to an elevated temperature or steam, and is output to the HRSG economizer (not shown). Each heat exchanger may include a bypass line 580 and valve 581 to selectively bypass the respective heat exchanger. Only one such bypass line is identified in FIG. 5 for clarity. A primary fuel heater heat exchanger 546 may be fed by steam 590 from the HSRG (not shown), and the resultant heated fuel is delivered to combustor 520.

The valves 581 and bypass lines 580 (if connected on all heat exchangers) allow for improved control over fuel heating and machine efficiency. For example, heat exchangers 540 and 544 may be connected in a loop to only heat the water input to the HRSG. Heat exchangers 540 and 542 may be connected in a loop to pre-heat the fuel supply. This configuration may greatly reduce or eliminate the steam withdrawn from the HRSG, and will permit more steam to be directed into a steam turbine (not shown). As another example, heat exchangers 540, 542 and 544 could be connected in a loop. This configuration will pre-heat fuel 560 and heat water 570 going into the HRSG. Heat exchangers 540, 542 and 546 may be connected in a loop and this will maximize the fuel heating potential. Alternatively, all heat exchangers may be connected in a loop so that all heat exchangers will benefit from the heat removed from the compressor casing.

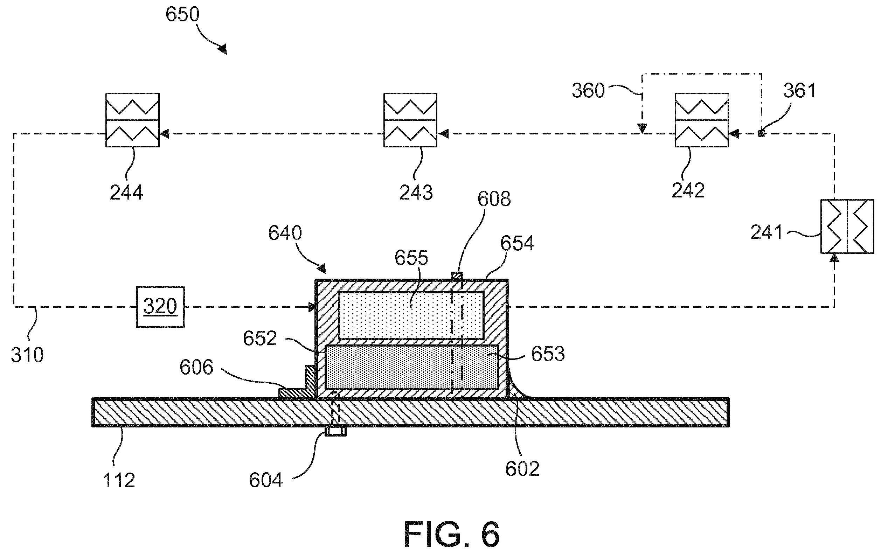

FIG. 6 illustrates a cross-sectional and schematic view of the cooling system 650, according to an aspect of the present invention. The heat pipe 652 is attached to the compressor casing 112 via manifold 654. The heat pipe 652 includes a heat transfer medium 653, such as a liquid metal or molten salt. The manifold 654 includes a coolant/heat transfer medium 655, such as water, steam, glycol or oil. The manifold 654 and/or heat pipes 652 may be attached to the compressor casing 112 by welds 602, bolts or fasteners 604, welded brackets 606 or clamps 608. The manifold 654 is thermally connected to a heat pipe heat exchanger 640. A conduit 310 connects the heat pipe heat exchanger 640 to a plurality of other heat exchangers. For example, the other heat exchangers may be a fuel heating heat exchanger 241, a fuel pre-heating heat exchanger 242, a HRSG heat exchanger 243 and any other desired heat exchanger 244. The heat pipe heat exchanger 640 transfers the heat from the manifolds 654 to the heat transfer medium in conduit 310. As examples only, the conduit's heat transfer medium may be water, glycol, oil or any other suitable fluid. A pump 320 may be used to force the fluid through the conduit 310 and the heat exchangers. The heat exchangers may also include valve controlled bypass lines 360 (only one is shown for clarity). A valve 361 can be operated so that it directs flow around the heat exchanger (e.g., 242) via bypass line/conduit 360.

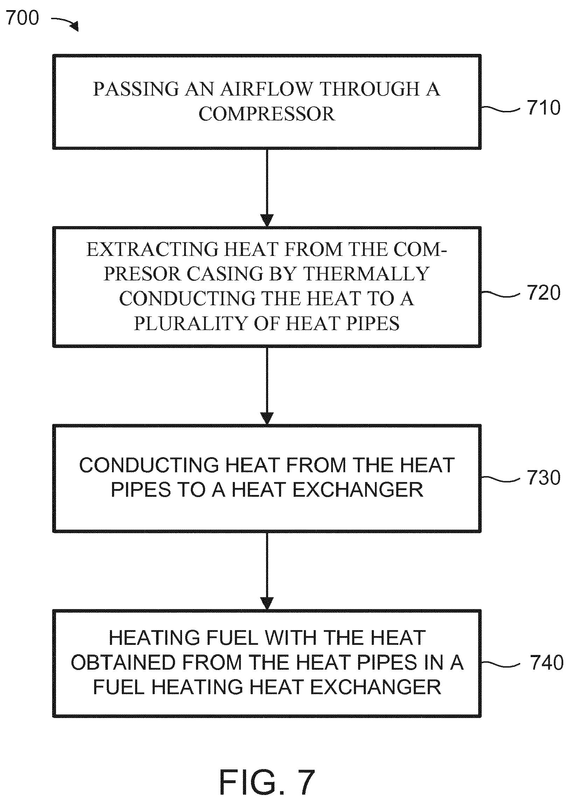

FIG. 7 illustrates a method 700 for extracting heat from a turbomachine. The method includes a step 710 of passing an airflow through a compressor, the compressor acting on the airflow to create a compressed airflow. An extracting step 720 extracts heat from the compressor casing 112 with a plurality of heat pipes 252. The heat pipes 252 may include a molten salt heat transfer medium, such as, potassium or sodium, or a liquid metal or combinations thereof. The heat pipes 252 are in thermal communication with and may be attached to the compressor casing 112. A conducting step 730 conducts heat from the heat pipes 252 to a heat pipe heat exchanger 240. The heat pipe heat exchanger 240 is configured to transfer heat to a fuel heating heat exchanger 542. A heating step 740 heats the fuel 560 with the heat obtained from the heat pipes in the fuel heating heat exchanger 542. In addition, the heat pipe heat exchanger 540 may be operably connected to a circuit including a heat recovery steam generator (HRSG) heat exchanger 544.

The cooling and fuel heating system of the present invention provides a number of advantages. Turbomachine efficiency may be improved and a reduced steam demand for fuel heating results in improved combined cycle heat rate. The turbine section buckets, wheels and combustion gas transition pieces may have improved lifespans due to the cooler compressor discharge airflow.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A turbomachine comprising:
   a compressor configured to compress air received at an intake portion to form a compressed airflow that exits into an outlet portion, the compressor having a compressor casing;
   a combustor operably connected with the compressor, the combustor receiving the compressed airflow;
   a turbine operably connected with the combustor, the turbine receiving combustion gas flow from the combustor;
   a cooling system operatively connected to the compressor casing, the cooling system including a plurality of heat pipes attached to and in thermal communication with the compressor casing, the plurality of heat pipes operatively connected to one or more manifolds, the plurality of heat pipes and the one or more manifolds are configured to transfer heat from the compressor casing to a plurality of heat exchangers.
2. The turbomachine of clause 1, the plurality of heat pipes further comprising a heat transfer medium including one or combinations of:
   aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.
3. The turbomachine of any preceding clause, the plurality of heat pipes further comprising a molten salt heat transfer medium including one or combinations of, potassium or sodium.
4. The turbomachine of any preceding clause, the plurality of heat pipes attached to the compressor casing via one or more of:
   welds, bolts, fasteners, welded brackets or clamps.
5. The turbomachine of any preceding clause, the plurality of heat pipes located circumferentially around the compressor casing.
6. The turbomachine of any preceding clause, each of the plurality of heat pipes located in a heat pipe heat exchanger, the heat pipe heat exchanger attached to the compressor casing.
7. The turbomachine of any preceding clause, wherein the one or more manifolds form part of a heat transfer loop, and the heat transfer medium in the heat transfer loop is at least one of:
   water, steam, glycol, oil, sodium, potassium or cesium.
8. The turbomachine of any preceding clause, the plurality of heat exchangers including a heat pipe heat exchanger operably connected to the plurality of heat pipes and the one or more manifolds, and the heat pipe heat exchanger also operably connected to:
   a fuel heating heat exchanger; or
   a heat recovery steam generator heat exchanger; or
   a fuel heating heat exchanger and a heat recovery steam generator heat exchanger.
9. The turbomachine of any preceding clause, further comprising:
   the plurality of heat pipes attached to the compressor casing via one or more of, welds, bolts, fasteners, welded brackets or clamps;
   the plurality of heat pipes located circumferentially around the compressor casing;
   each of the plurality of heat pipes located in a heat pipe heat exchanger, the heat pipe heat exchanger attached to the compressor casing; and
   wherein the one or more manifolds form part of a heat transfer loop, and the heat transfer medium in the heat transfer loop is at least one of, water, steam, glycol, oil, sodium, potassium or cesium.
10. The turbomachine of any preceding clause, wherein the heat pipe heat exchanger is operably connected to at least one of:
   a fuel heating heat exchanger;
   a heat recovery steam generator heat exchanger; or
   a fuel heating heat exchanger and a heat recovery steam generator heat exchanger.
11. A cooling system for a turbomachine, the turbomachine including a compressor, a combustor operably connected with the compressor, and a turbine operably connected with the combustor, the compressor having a compressor casing, the cooling system operatively connected to the compressor casing, the cooling system comprising:
   a plurality of heat pipes attached to and in thermal communication with the compressor casing, the plurality of heat pipes operatively connected to one or more manifolds, the plurality of heat pipes and the one or more manifolds are configured to transfer heat from the compressor casing to a plurality of heat exchangers.
12. The cooling system of any preceding clause, the plurality of heat pipes further comprising a heat transfer medium including one or combinations of:
   aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.
13. The cooling system of any preceding clause, the plurality of heat pipes further comprising a molten salt heat transfer medium including one or combinations of, potassium, sodium or cesium.
14. The cooling system of any preceding clause, the plurality of heat pipes attached to the compressor casing via one or more of:
   welds, bolts, fasteners, welded brackets or clamps.
15. The cooling system of any preceding clause, the plurality of heat pipes located circumferentially around the compressor casing.
16. The cooling system of any preceding clause, each of the plurality of heat pipes located in a heat pipe heat exchanger, the heat pipe heat exchanger attached to the compressor casing.
17. The cooling system of any preceding clause, the plurality of heat exchangers including a heat pipe heat exchanger operably connected to the plurality of heat pipes and the one or more manifolds, and the heat pipe heat exchanger also operably connected to at least one of:
   a fuel heating heat exchanger;
   a heat recovery steam generator heat exchanger; or
   a fuel heating heat exchanger and a heat recovery steam generator heat exchanger.
18. The cooling system of any preceding clause, further comprising:
   the plurality of heat pipes attached to the compressor casing via one or more of, welds, bolts, fasteners, welded brackets or clamps;
   the plurality of heat pipes located circumferentially around the compressor casing;
   each of the plurality of heat pipes located in a heat pipe heat exchanger, the heat pipe heat exchanger attached to the compressor casing; and
   wherein the one or more manifolds form part of a heat transfer loop, and the heat transfer medium in the heat transfer loop is at least one of, water, steam, glycol, oil, sodium, potassium or cesium.
19. A method of extracting heat from a compressor casing of a turbomachine, the method comprising:
   passing an airflow through a compressor, the compressor casing forming an outer shell of the compressor; the compressor acting on the airflow to create a compressed airflow;
   extracting heat from the compressor casing by thermally conducting the heat to a plurality of heat pipes, the plurality of heat pipes comprising a molten salt heat transfer medium including one or combinations of, potassium, sodium or cesium; and
   conducting heat from the plurality of heat pipes to a heat pipe heat exchanger, the heat pipe heat exchanger configured to transfer heat to a fuel heating heat exchanger.
20. The method of any preceding clause, the heat pipe heat exchanger operably connected to a circuit including a heat recovery steam generator heat exchanger.

## Claims

1. A turbomachine (100) comprising:
a compressor (110) configured to compress air received at an intake portion to form a compressed airflow that exits into an outlet portion, the compressor having a compressor casing;
a combustor (120) operably connected with the compressor, the combustor receiving the compressed airflow;
a turbine (130) operably connected with the combustor, the turbine receiving combustion gas flow from the combustor;
a cooling system (250) operatively connected to the compressor casing, the cooling system including a plurality of heat pipes (252) attached to and in thermal communication with the compressor casing, the plurality of heat pipes (252) operatively connected to one or more manifolds (254), the plurality of heat pipes and the one or more manifolds are configured to transfer heat from the compressor casing to a plurality of heat exchangers.

2. The turbomachine (100) of claim 1, the plurality of heat pipes (252) further comprising a heat transfer medium including one or combinations of:
aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.

3. The turbomachine (100) of any preceding claim, the plurality of heat pipes (252) further comprising a molten salt heat transfer medium including one or combinations of, potassium or sodium.

4. The turbomachine (100) of any preceding claim, the plurality of heat pipes (252) attached to the compressor casing via one or more of:
welds, bolts, fasteners, welded brackets or clamps.

5. The turbomachine (100) of any preceding claim, the plurality of heat pipes (252) located circumferentially around the compressor casing.

6. The turbomachine (100) of any preceding claim, each of the plurality of heat pipes (252) located in a heat pipe heat exchanger, the heat pipe heat exchanger attached to the compressor casing.

7. The turbomachine (100) of any preceding claim, wherein the one or more manifolds (254) form part of a heat transfer loop, and the heat transfer medium in the heat transfer loop is at least one of:
water, steam, glycol, oil, sodium, potassium or cesium.

8. The turbomachine (100) of any preceding claim, the plurality of heat exchangers including a heat pipe heat exchanger operably connected to the plurality of heat pipes and the one or more manifolds, and the heat pipe heat exchanger also operably connected to:
a fuel heating heat exchanger; or
a heat recovery steam generator heat exchanger; or
a fuel heating heat exchanger and a heat recovery steam generator heat exchanger.

9. The turbomachine (100) of any preceding claim, further comprising:
the plurality of heat pipes attached to the compressor casing via one or more of, welds, bolts, fasteners, welded brackets or clamps;
the plurality of heat pipes located circumferentially around the compressor casing;
each of the plurality of heat pipes located in a heat pipe heat exchanger, the heat pipe heat exchanger attached to the compressor casing; and
wherein the one or more manifolds form part of a heat transfer loop, and the heat transfer medium in the heat transfer loop is at least one of, water, steam, glycol, oil, sodium, potassium or cesium.

10. The turbomachine (100) of any preceding claim, wherein the heat pipe heat exchanger is operably connected to at least one of:
a fuel heating heat exchanger;
a heat recovery steam generator heat exchanger; or
a fuel heating heat exchanger and a heat recovery steam generator heat exchanger.

11. A cooling system (250) for a turbomachine (100), the turbomachine including a compressor, a combustor operably connected with the compressor, and a turbine operably connected with the combustor, the compressor having a compressor casing, the cooling system operatively connected to the compressor casing, the cooling system comprising:
a plurality of heat pipes attached to and in thermal communication with the compressor casing, the plurality of heat pipes operatively connected to one or more manifolds, the plurality of heat pipes and the one or more manifolds are configured to transfer heat from the compressor casing to a plurality of heat exchangers.

12. The cooling system (250) of claim 11, the plurality of heat pipes further comprising a heat transfer medium including one or combinations of:
aluminum, beryllium, beryllium-fluorine alloy, boron, calcium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.

13. The cooling system (250) of claim 11 or claim 12, the plurality of heat pipes further comprising a molten salt heat transfer medium including one or combinations of, potassium, sodium or cesium.

14. A method (700) of extracting heat from a compressor casing of a turbomachine (100), the method comprising:
passing an airflow through a compressor, the compressor casing forming an outer shell of the compressor; the compressor acting on the airflow to create a compressed airflow;
extracting heat from the compressor casing by thermally conducting the heat to a plurality of heat pipes, the plurality of heat pipes comprising a molten salt heat transfer medium including one or combinations of, potassium, sodium or cesium; and
conducting heat from the plurality of heat pipes to a heat pipe heat exchanger, the heat pipe heat exchanger configured to transfer heat to a fuel heating heat exchanger.

15. The method (700) of claim 14, the heat pipe heat exchanger operably connected to a circuit including a heat recovery steam generator heat exchanger.
